## Europäisches Patentamt

## European Patent Office

## Office européen des brevets

(19)

(11) Veröffentlichungsnummer: **0 238 940**
**B1**

(12) **EUROPÄISCHE PATENTSCHRIFT**

(45) Veröffentlichungstag der Patentschrift:
14.11.90

(51) Int. Cl.⁵: **H02K 3/28, H02P 1/32**

(21) Anmeldenummer: 87103541.6

(22) Anmeldetag: **11.03.87**

(54) Antriebsanordnung mit einem Drehstrommotor.

(30) Priorität: 25.03.86 DE 3610097

(43) Veröffentlichungstag der Anmeldung:
30.09.87 Patentblatt 87/40

(45) Bekanntmachung des Hinweises auf die Patenterteilung:
14.11.90 Patentblatt 90/46

(84) Benannte Vertragsstaaten:
DE FR GB IT

(56) Entgegenhaltungen:
DE-B- 1 021 945
FR-A- 547 021
FR-A- 2 191 323
FR-A- 2 262 431

(73) Patentinhaber: Siemens Aktiengesellschaft,
Wittelsbacherplatz 2, D-8000 München 2(DE)

(72) Erfinder: Ghosh, Shyamal-Krishna, Dipl.-Ing.,
Hohenrother Strasse 22, D-8740 Bad Neustadt(DE)

**Beschreibung**

Die Erfindung betrifft eine Antriebsanordnung mit einem Drehstrommotor, dessen Ständerwicklung je Phase mehr als zwei Wicklungsstränge aufweist, bei welcher Antriebsanordnung zum Hochlauf des Motors mittels eines Schalters ein Wicklungsstrang einer Phase mit mindestens einem Wicklungsstrang einer anderen Phase zur Drehmomenterzeugung zusammengeschaltet ist und nach dem Hochlauf alle Wicklungsstränge mittels eines weiteren Schalters für sich ans Netz geschaltet sind.

Eine solche Antriebsanordnung ist durch die DE-B 1 021 945 bekannt. Bei einem in dieser Schrift beschriebenem Ausführungsbeispiel weist der Drehstrommotor je Phase je drei Wicklungsteile auf. Während des Anlaufes des Motors wird eine gemischte Stern-Dreieck-Schaltung verwendet, wobei die Sternstrahlen aus zwei parallel geschalteten Wicklungsteilen bestehen. Die Sternstrahlen sind an die Eckpunkte der aus den restlichen drei Wicklungsteilen gebildeten Dreieck-Schaltung angeschlossen. Nach dem Hochlauf werden alle drei Wicklungsteile je Phase parallel geschaltet.

Bei einem weiteren Ausführungsbeispiel sind je Phase vier Wicklungsteile vorgesehen. Der Anlauf des Motors erfolgt in Sternschaltung, wobei alle vier Wicklungsteile einer Phase in Reihe geschaltet sind. Nach dem Hochlauf wird eine gemischte Reihen-Parallelschaltung gebildet, so daß nur noch drei Wicklungsteile je Phase in Reihe liegen. Die übrigen Ausführungsbeispiele dieser Entgegenhaltung beziehen sich auf Drehstrommotoren, deren Wicklung je Phase zwei Wicklungsteile aufweist.

Bei dem einen Ausführungsbeispiel mit drei Wicklungsteilen je Phase sind die von den einzelnen Wicklungsteilen erzeugten Komponenten des magnetischen Feldes verschieden gerichtet, so daß sich hierdurch eine Verringerung des Wickelfaktors ergibt. Außerdem können leicht Verzerrungen, d.h. Unsymmetrien des Gesamtfeldes auftreten.

Bei dem anderen Ausführungsbeispiel eines Drehstrommotors mit vier Wicklungsteilen je Phase wird während des Anlaufes zwar die Symmetrie gewahrt, jedoch ergibt sich eine nur ungenügende Reduzierung des Anlaufstromes.

Der Erfindung liegt die Aufgabe zugrunde, eine Antriebsanordnung zu schaffen, bei der auch während des Anlaufes das magnetische Feld einen vollständig symmetrischen Verlauf aufweist und bei der eine weit stärkere Reduzierung des Anlaufstromes möglich ist.

Die Lösung der gestellten Aufgabe gelingt nach der Erfindung dadurch, daß alle Wicklungsstränge einer Phase jeweils in gleichen Nuten angeordnet sind und daß während des Hochlaufes die Wicklungsstränge jeder Phase symmetrisch so verschaltet und ans Netz angeschlossen sind, daß sich die von mindestens zwei Wicklungssträngen je Phase erzeugten magnetischen Felder gegenseitig aufheben und nur die restlichen Wicklungsstränge ein Drehfeld erzeugen. Zur Drehmomentbildung tragen nur die das Drehfeld erzeugenden Wicklungsstränge bei. Da diese Wicklungsstränge gleichmäßig über den Ständerumfang verteilt sind, entsteht kein seitlicher magnetischer Zug. Die anderen Wicklungsstränge wirken während der Anlaufphase nur als ohmscher Widerstand, da sich die von ihnen erzeugten magnetischen Felder aufheben. Diese Wicklungsstränge übernehmen während der Anlaufphase somit die Funktion eines Anlaufwiderstandes.

Die Wicklungsstränge können gemäß Anspruch 2 so verschaltet werden, daß nach dem Hochlauf ein Wicklungsstrang von einer Phase mit jeweils einem Wicklungsstrang der beiden anderen Phasen in Stern geschaltet und ans Netz angeschlossen ist. Auf diese Weise arbeitet ein Motor mit drei Wicklungssträngen je Phase nach dem Hochlauf in Dreifach-Sternschaltung.

Bei einer Verschaltung der Wicklungsstränge nach Anspruch 3 wird nach dem Hochlauf eine Dreifach-Dreieck-Schaltung der Wicklungsstränge erreicht.

Durch entsprechende Wahl von unterschiedlichen Drahtquerschnitten für die einzelnen Wicklungsstränge und/oder unterschiedlichen Windungszahlen kann der Anlaufstrom dem jeweiligen Bedarfsfall angepaßt werden.

Anhand eines in der Zeichnung dargestellten Ausführungsbeispieles wird der Anmeldungsgegenstand nachfolgend näher beschrieben. Es zeigt:

Fig. 1 ein Wickelschema des Antriebsmotors einer Antriebsanordnung,

Fig. 2 ein Schaltschema einer Antriebsanordnung, bei der der Motor nach dem Hochlauf in Dreifach-Sternschaltung betrieben ist und

Fig. 3 ein Schaltschema einer Antriebsanordnung, bei der der Motor nach dem Hochlauf in Dreifach-Dreieckschaltung betrieben ist.

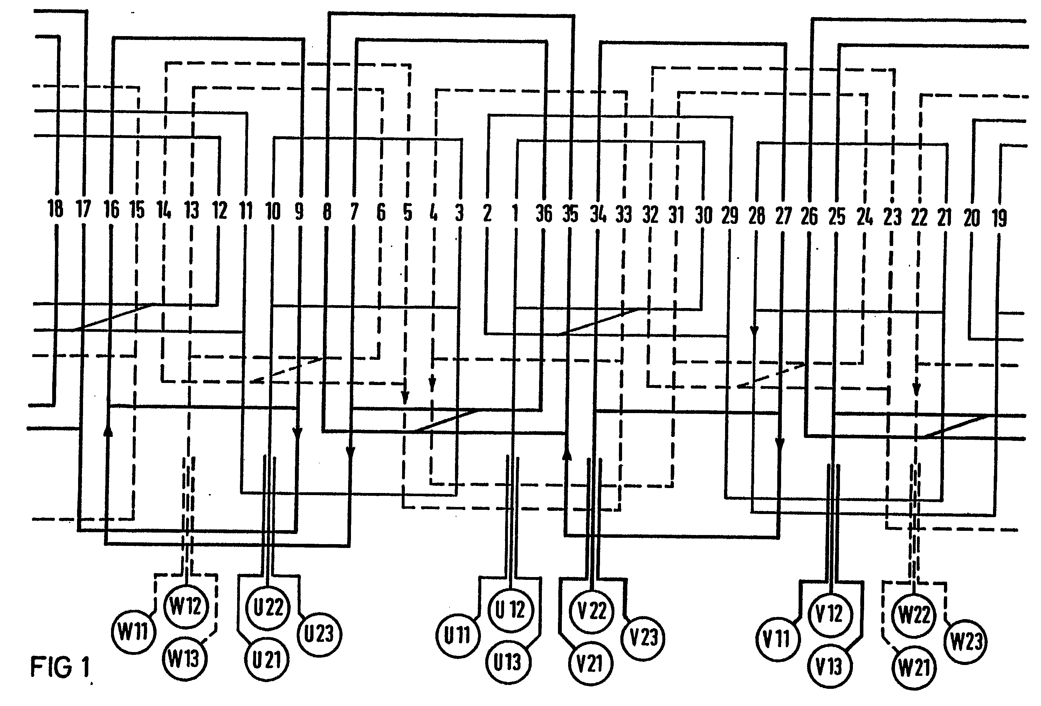

Wie aus dem Wickelschema der Fig. 1 erkennbar ist, besteht jede Phase der Ständerwicklung aus drei Wicklungssträngen. Zur Phase U gehören die Wicklungsstränge U1, U2, U3 zur Phase V die Wicklungsstränge V1, V2, V3 und zur Phase W die Wicklungsstränge W1, W2, W3. Durch die mit zweistelligen Indizes versehenen Kennbuchstaben der Wicklungsstränge sind jeweils die Wicklungsanfänge und -enden bezeichnet. Dabei kennzeichnen die mit der Ziffer 1 beginnenden Indizes jeweils den Anfang und die mit der Ziffer 2 beginnenden Indizes jeweils das Ende eines Wicklungsstranges.

Die zu einer Phase gehörenden Wicklungsstränge sind jeweils parallel in gleiche Nuten gewickelt, dies ist durch die dreifachen Striche am Anfang und Ende jedes Wicklungsstranges angedeutet. Anfang und Ende jedes Wicklungsstranges sind herausgeführt, sodaß die für den Anlauf und den Betrieb des Motors notwendige Verschaltung der einzelnen Wicklungsstränge vorgenommen werden kann.

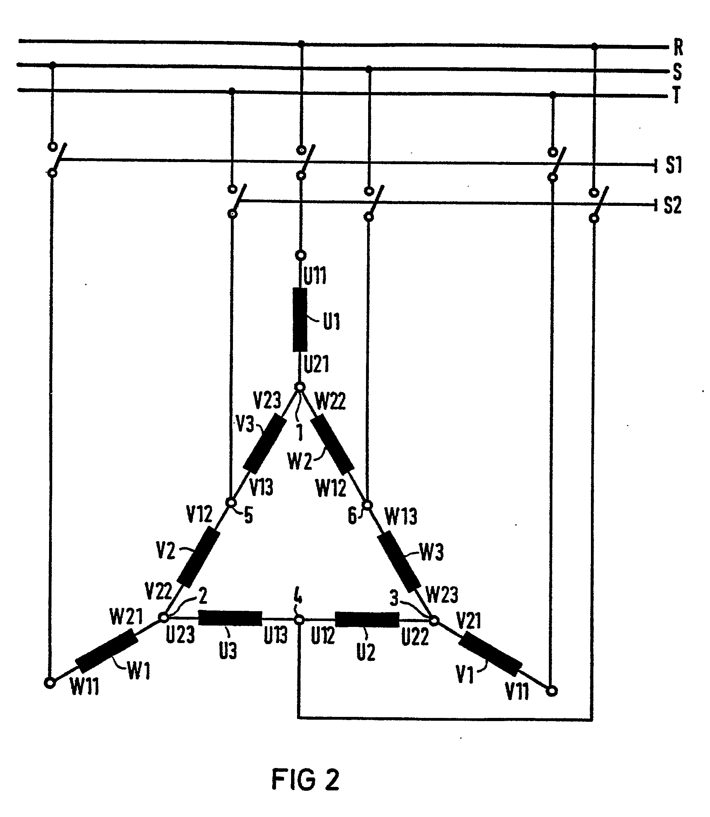

Bei der in Fig. 2 dargestellten Schaltungsvarianten einer Antriebsanordnung sind jeweils zwei Wicklungsstränge U2, U3 bzw. V2, V3 bzw. W2, W3 einer Phase gegensinnig in Reihe geschaltet und diese Reihenschaltungen dann zu einem Dreieck verbunden, wobei die Zusammenschaltung zum Dreieck entsprechend der gewünschten Drehrichtung des Drehstrommotors erfolgt. Gegensinnig in Reihe geschaltet bedeutet, daß jeweils die Anfänge U12, U13 bzw. V12, V13 bzw. W12, W13 der beiden zu einer Phase gehörenden und jeweils eine Seite des Dreiecks bildenden Wicklungsstränge U2 und U3 bzw. V2 und V3 bzw. W2 und W3 miteinander verbunden sind. Die Enden U22, U23 bzw. V22, V23 bzw. W22, W23 dieser Wicklungsstränge sind jeweils mit dem Ende eines zu einer benachbarten Phase gehörenden Wicklungsstranges verbunden. Entsprechend der Darstellung in Fig. 2 sind die Enden V23 und W22 zum ersten Eckpunkt 1, die Enden V22 und U23 zum zweiten Eckpunkt 2 und die Enden U22 und W23 zum dritten Eckpunkt 3 der Dreieckschaltung verbunden.

Die dritten Wicklungsstränge U1 bzw. V1 bzw. W1 der einzelnen Phasen U, V und W sind je für sich mit ihrem Wicklungsende U21 bzw. V21 bzw. W21 an einen der Eckpunkte 1, 2 bzw. 3 der Dreieckschaltung angeschlossen und zwar derart, daß an jedem Eckpunkt 1, 2 bzw. 3 die Enden je eines Wicklungsstranges von jeder Phase U, V, W miteinander verbunden sind. Im Eckpunkt 1 sind somit die Wicklungsenden U21, V23 und W22, im Eckpunkt 2 die Wicklungsenden U23, V22 und W21 sowie im Eckpunkt 3 die Wicklungsenden U22, V21 und W23 zusammengeschlossen. Die freien Wicklungsenden U11, V11 und W11 der nicht zum Dreieck gehörenden Wicklungsstränge U1, V1 und W1 sind mittels eines Schalters S1 an die Netzphasen R, S, T schaltbar. Die gemeinsamen Verbindungspunkte 4, 5 und 6 der in den Seiten des Dreiecks liegenden Wicklungsstränge U2, U3 bzw. V2, V3 und W2, W3 sind mittels eines weiteren Schalters S2 ebenfalls an die Netzphasen R, S, T schaltbar, wobei der weitere Schalter S2 zeitverzögert gegenüber dem einen Schalter S1 erst nach dem Hochlauf des Motors geschlossen wird. Die beiden Schalter S1 und S2 sind so mit den Wicklungssträngen und den Netzphasen R, S, T verbunden, daß die zu einer Phase U bzw. V bzw. W gehörenden Wicklungsstränge U1, U2, U3 bzw. V1, V2, V3 bzw. W1, W2, W3 jeweils an die gleiche Netzphase R bzw. S bzw. T geschaltet werden. Entsprechend dem dargestellten Ausführungsbeispiel in Fig. 2 werden die zur Phase U gehörenden Wicklungsstränge U1, U2, U3 an die Netzphase R, die zur Phase V gehörenden Wicklungsstränge V1, V2, V3 an die Netzphase T und die zur Phasenwicklung W gehörenden Wicklungsstränge W1, W2 und W3 an die Netzphase S geschaltet.

Zum Anlauf des Drehstrommotors der Antriebsanordnung wird z.B. der eine Schalter S1 geschlossen. Damit liegen nur die Wicklungsanfänge U11, V11 und W11 an Spannung. Infolge dessen fließt in den Seiten der Dreieckschaltung der Strom nur in einer Richtung. Da die in einer Seite des Dreiecks liegenden Wicklungsstränge U2 und U3, V1 und V3 bzw. W1 und W3 gegensinnig in Reihe geschaltet sind, heben sich die durch diese Wicklungsstränge erzeugten magnetischen Felder auf. Der Strom in diesen Wicklungssträngen trägt somit nicht zur Drehmomentbildung bei. Diese Wicklungsstränge wirken während der Anlaufphase vielmehr nur als ohmscher Widerstand, durch den der Anlaufstrom reduziert wird. Das Anlaufmoment wird allein durch die zwischen dem einen Schalter S1 und den Eckpunkten 1, 2 und 3 der Dreieckschaltung angeschlossenen Wicklungsstränge U1, V1 und W1 erzeugt. Da diese Wicklungsstränge gleichmäßig über den Ständerumfang des Drehstrommotors verteilt sind, entsteht ein symmetrisches Drehfeld.

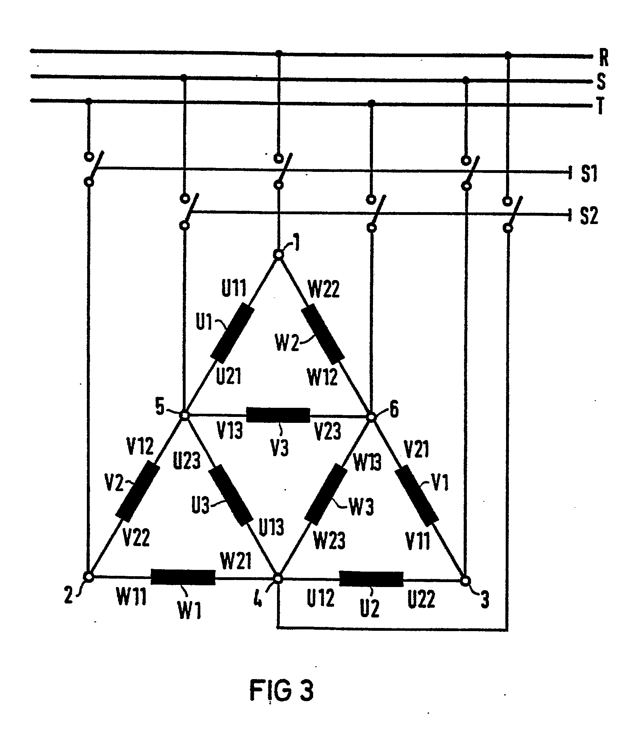

Die Schaltungsvariante nach Fig. 3 ist so ausgeführt, daß nach dem Hochlauf des Motors alle Wicklungsstränge in Dreifach-Dreieckschaltung an den Netzphasen R, S, T liegen. Hierzu ist die Schaltung der einzelnen Wicklungsstränge so getroffen, daß zunächst ein Wicklungsstrang einer Phase mit einem Wicklungsstrang einer anderen Phase gleichsinnig in Reihe geschaltet und diese Reihenschaltungen wiederum zu einem Dreieck derart zusammengeschaltet sind, daß ein Drehfeld in der gewünschten Drehrichtung des Motors entsteht. Gleichsinnig bedeutet hierbei, daß in dem gemeinsamen Verbindungspunkt 4 bzw. bzw. 6 von zwei in einer Seite des Dreiecks angeordneten Wicklungssträngen jeweils der Wicklungsanfang des einen Wicklungsstranges mit dem Wicklungsende des anderen Wicklungsstranges verbunden ist.

Gemäß der Darstellung in Fig. 3 sind in den einzelnen Seiten der Dreieckschaltung die Wicklungsstränge U1 und V2 bzw. W1 und U2 bzw. V1 bzw. W2 in Reihe geschaltet. Die verbleibenden dritten Wicklungsstränge U3, V3 und W3 der einzelnen Phasen U, V, W sind zwischen den gemeinsamen Verbindungspunkten 4, 5, 6 angeschlossen und zwar derart, daß zwischen zwei Verbindungspunkten z.B. den Verbindungspunkten 5 und 6 und dem gegenüberliegenden Eckpunkt 1 des Dreiecks eine Dreieckschaltung aus je einem Wicklungsstrang der drei Phasen U, V, W gebildet ist.

Da an dem Eckpunkt 1 die zu den Phasen U und W gehörenden Wicklungsstränge U1 und W2 miteinander verbunden sind, ist entsprechend zwischen dem Verbindungspunkt 5 und 6 der zur Phase V gehörende Wicklungsstrang V3 angeschlossen. Im Eckpunkt 2 sind die Wicklungsstränge V2 und W1 zusammengeschlossen, sodaß zwischen den Verbindungspunkten 5 und 4 der Wicklungsstrang U3 der Phase U angeschlossen werden muß. Schließlich ist zwischen den Verbindungspunkten 4 und 6 noch der Wicklungsstrang W3 angeschlossen, der die beiden im Eckpunkt 3 zusammengeführten Wicklungsstränge V1 und U2 an ihren anderen Wicklungsenden V21 und U12 miteinander verbindet.

Während des Anlaufes ist zunächst nur der eine Schalter S1 geschlossen, über den die Eckpunkte 1, 2, 3 an die Netzphasen R, S, T geschaltet werden. Durch die vorbeschriebene symmetrische Verschaltung der Wicklungsstränge wird erreicht, daß sich die drehmomentbildende Wirkung von jeweils zwei zu einer Phase gehörenden Wicklungssträngen aufhebt, d.h. das Drehmoment wird während des Hochlaufs jeweils nur von einem Wicklungsstrang jeder Phase erzeugt.

Nach dem Hochlauf des Motors wird der weitere Schalter S2 geschlossen und dadurch die Anschaltung der Verbindungspunkte 4, 5 und 6 an die Netzphasen R, S, T bewirkt. Die beiden Schalter sind so an die Eckpunkte 1, 2 und 3 und an die Verbindungspunkte 4, 5 und 6 sowie an die Netzphasen R, S, T angeschlossen, daß jeweils die Anfänge U11, U12, U13 bzw. V11, V12, V13 bzw. W11, W12, W13 der zu den einzelnen Phasen U, V, W gehörenden Wicklungsstränge nach dem Hochlauf an die gleiche Netzphase R bzw. S bzw. T geschaltet sind. Es sind somit der Wicklungsanfang U11 über den einen Schalter S1 und die Wicklungsanfänge U12 und U13 über den weiteren Schalter S2 an die Netzphase R geschaltet. In der gleichen Weise sind der Wicklungsanfang V11 bzw. W11 über den einen Schalter S1 und die Wicklungsanfänge V12, V13 bzw. W12, W13 über den weiteren Schalter S2 an die Netzphase S bzw. T geschaltet.

Auf diese Weise sind die jeweils zwischen einem Eckpunkt und zwei Verbindungspunkten aus je einem Wicklungsstrang U1, V3, W2 bzw. V2, W1, U3 bzw. U2, V1, W3 der drei Phasen U, V, W gebildeten Dreiecke parallel an das Netz geschaltet. Im Betrieb besteht somit eine Dreifach-Dreieckschaltung.

Durch entsprechende Bemessung der Drahtquerschnitte und/oder der Windungszahlen der Wicklungsstränge kann der Anlaufstrom in bestimmten Grenzen dem jeweiligen Bedarfsfall angepaßt werden.

**Patentansprüche**

1. Antriebsanordnung mit einem Drehstrommotor, dessen Ständerwicklung je Phase (U, V, W) mehr als zwei Wicklungsstränge aufweist, bei welcher Antriebsanordnung zum Hochlauf des Motors mittels eines Schalters ein Wicklungsstrang einer Phase mit mindestens einem Wicklungsstrang einer anderen Phase zur Drehmomenterzeugung zusammengeschaltet ist und nach dem Hochlauf alle Wicklungsstränge mittels eines weiteren Schalters für sich ans Netz geschaltet sind, dadurch gekennzeichnet, daß alle Wicklungsstränge einer Phase jeweils in gleichen Nuten angeordnet sind, daß während des Hochlaufes die Wicklungsstränge (U1, U2, U3, bzw. V1, V2, V3 bzw. W1, W2, W3) jeder Phase (U, V, W) symmetrisch so verschaltet und ans Netz (R, S, T) angeschlossen sind, daß sich die von mindestens zwei Wicklungssträngen je Phase erzeugten magnetischen Felder gegenseitig aufheben und nur die restlichen Wicklungsstränge ein Drehfeld erzeugen.

2) Antriebsanordnung nach Anspruch 1, mit einem Drehstrommotor, dessen Ständerwicklung je Phase drei Wicklungsstränge aufweist, dadurch gekennzeichnet, daß je zwei Wicklungsstränge (U2, U3 bzw. V2, V3 bzw. W2, W3) einer Phase (U, V, W) mit entgegengesetztem Wickelsinn in Reihe geschaltet und die so gebildeten Reihenschaltungen im Dreieck miteinander verbunden sind, wobei jeweils der dritte Wicklungsstrang (U1 bzw. V1 bzw. W1) einer Phase an den Eckpunkt (1 bzw. 2 bzw. 3) des Dreiecks angeschlossen ist, an dem die Wicklungsstränge (V3 und W2 bzw. V2 und U3 bzw. U2 und W3) der beiden anderen Phasen miteinander verbunden sind, daß ferner während des Hochlaufes entweder die freien Anschlüsse der dritten Wicklungsstränge (U1, V1, W1) mittels des einen Schalters (S1) oder die gemeinsamen Verbindungspunkte (4, 5, 6) der gegensinnig in Reihe geschalteten Wicklungsstränge (U2, U3 bzw. V2, V3 bzw. W2, W3) mittels des weiteren Schalters (S2) jeweils an eine Netzphase (R, S, T) schaltbar sind und nach dem Hochlauf durch Schließen beider Schalter (S1 und S2) eine dreifache Sternschaltung gebildet ist.

3) Antriebsanordnung nach Anspruch 1, mit einem Drehstrommotor, dessen Ständerwicklung je Phase drei Wicklungsstränge aufweist, dadurch gekennzeichnet, daß von den drei Wicklungssträngen (U1, U2, U3 bzw. V1, V2, V3 bzw. W1, W2, W3) jeder Phase (U, V, W) jeweils zwei (U1, U2 bzw. V1, V2 bzw. W1, W2) mit je einem Wicklungsstrang der beiden anderen Phasen mit gleichem Wickelsinn in Reihe geschaltet und die so gebildeten Reihenschaltungen von je zwei Wicklungssträngen (U1, V2 bzw. W1, U2 bzw. V1, W2) derart zu einem Dreieck verbunden sind, daß die für die Reihenschaltung von zwei Wicklungssträngen gewählte Phasenfolge für die Dreieckschaltung beibehalten ist, daß ferner die dritten Wicklungsstränge (U3, V3, W3) der einzelnen Phasen in der gleichen Phasenfolge an die gemeinsamen Verbindungspunkte (4, 5, 6) der in den einzelnen Seiten des Dreiecks angeordneten Wicklungsstränge angeschlossen sind und daß während des Hochlaufes die Eckpunkte (1, 2, 3) des Dreiecks mittels des einen Schalters (S1) jeweils an eine Netzphase (R, S, T) schaltbar sind und nach dem Hochlauf die gemeinsamen Verbindungspunkte (4, 5, 6) der in den Seiten des Dreiecks liegenden Wicklungsstränge (U1, V2 bzw. W1, U2 bzw. V1, W2) mittels des weiteren Schalters (S2) derart ans Netz (R, S, T) schaltbar sind, daß eine dreifache Dreieckschaltung gebildet ist.

4) Antriebsanordnung nach einem oder mehreren der vorhergehenden Ansprüche, dadurch gekennzeichnet, daß zumindest einer der Wicklungsstränge jeder Phase gegenüber den weiteren Wicklungssträngen der gleichen Phase einen unterschiedlichen Querschnitt und/oder eine unterschiedliche Windungszahl aufweist.

**Claims**

1. A drive arrangement with a three-phase a.c. motor, the stator winding of which has (U,V,W) more than two phase windings per phase, in which drive arrangement, for acceleration of the motor, a phase winding of one phase is connected together with at least one phase winding of another phase for torque generation by means of a switch and after acceleration all phase windings are connected by means of a further switch independently to the network, characterised in that all phase windings of one phase are arranged in each case in the same grooves, so that during acceleration the phase windings (U1, U2, U3 or V1, V2, V3 or W1, W2, W3) of each phase (U, V, W) are connected symmetrically and connected to the network (R, S, T), so that the magnetic fields generated by at least two phase windings per phase cancel each other and only the remaining phase windings generate a rotary field.

2. A drive arrangement according to claim 1, with a three-phase a.c. motor, the stator winding of which has three phase windings per phase, characterised in that two phase windings (U2, U3 or V2, V3 or W2, W3) of each phase (U, V, W) are connected in series with opposing winding directions and the series connections so formed are delta-connected to each other, wherein in each case the third phase winding (U1 or V1 or W1) of a phase is connected to the corner point (1 or 2 or 3) of the delta, at which the phase windings (V3 and W2 or V2 and U3 or U2 and W3) of the two other phases are connected together, so that furthermore during acceleration either the free connections of the third phase windings (U1, V1, W1) are able to be connected to the network (R, S, T) by means of the one switch (S1) or the common connecting points (4, 5, 6) of the phase windings (U2, U3 or V2, V3 or W2, W3), connected in series in the opposing direction, by means of the further switch (S2) and after acceleration by closing both switches (S1 and S2) a triple star connection is formed.

3. A drive arrangement according to claim 1 with a three-phase a.c. motor, the stator winding of which has per phase three phase windings, characterised in that of three phase windings (U1, U2, U3 or V1, V2, V3 or W1, W2, W3) of each phase (U,V,W), two (U1, U2 or V1, V2 or W1, W2) are each connected in series with one phase winding of the two other phases with the same winding direction and the series connections so formed by two phase windings (U1, V2 or W1, U2 or V1, W2) are connected to a delta such that the phase series selected by two phase windings for the series connection is kept for the delta-connection such that furthermore the third phase windings (U3, V3, W3) of individual phases in the same phase series are connected to the common connecting points (4, 5, 6) of the phase windings arranged in the individual sides of the delta and that during acceleration the corner points (1, 2, 3) of the delta are able to be connected by means of the one switch (S1) in each case to a network phase (R, S, T) and after acceleration the common connecting points (4,5,6) of the phase windings (U1, V2 or W1, U2 or V1, W2) lying in the sides of the triangle are able to be connected to the network (R, S, T) by means of the further switch (S2) such that a triple delta-connection is formed.

4. A drive arrangement according to one or several of the previous claims, characterised in that at least one of the phase windings of each phase, compared with the further phase windings of the same phase, has a varying cross-section and/or a varying winding number.

**Revendications**

1. Dispositif d'entraînement comportant un moteur triphasé, dont l'enroulement statorique possède, pour chaque phase (U, V, W), plus de deux faisceaux d'enroulement, et dans lequel, lors de l'accélération du moteur, un faisceau d'enroulement d'une phase est interconnecté, au moyen d'un interrupteur, à au moins un faisceau d'enroulement d'une autre phase pour la production du couple et, après l'accélération, tous les faisceaux d'enroulements sont raccordés en soi au réseau, par l'intermédiaire d'un autre interrupteur, caractérisé par le fait que tous les faisceaux d'enroulement d'une phase sont disposés respectivement dans les mêmes encoches, que pendant l'accélération, les faisceaux d'enroulement (U1, U2, U3 ou V1, V2, V3 ou W1, W2, W3) de chaque phase (U, V, W) sont câblés de façon symétrique et sont raccordés au réseau (R, S, T), de telle sorte que les champs magnétiques produits pour chaque phase par au moins deux faisceaux d'enroulement s'annihilent réciproquement et que seuls les autres faisceaux d'enroulement produisent un champ tournant.

2. Dispositif d'entraînement suivant la revendication 1, comportant un moteur triphasé, dont l'enroulement statorique comporte, pour chaque phase, trois faisceaux d'enroulement, caractérisé par le fait que respectivement deux faisceaux d'enroulement (U2, (U3 ou V2, V3 ou W2, W3) d'une phase (U, V, W) sont branchés en série avec des sens de bobinage opposés et que les circuits série ainsi formés sont reliés entre eux selon un montage en triangle, le troisième faisceau d'enroulement respectif (U1 ou V1 ou W1) d'une phase étant raccordé au sommet (1 ou 2 ou 3) du triangle, au niveau duquel les faisceaux d'enroulement (V3 ou W2 ou V2 et U3 ou U2 et W3) des deux autres phases sont reliés entre eux, qu'en outre, pendant l'accélération, soit les bornes libres des troisièmes faisceaux d'enroulement (U1, V1, W1) peuvent être raccordés au moyen d'un premier interrupteur (S1), soit les points de jonction commun (4, 5, 6) des faisceaux d'enroulement (U2, U3 ou V2, V3 ou W2, W3) branchés en série avec des sens opposés peuvent être raccordés au moyen de l'autre interrupteur (S2), respectivement à une phase du réseau (R, S, T) et qu'après l'accélération, un circuit en étoile triple est formé au moyen de la fermeture des deux interrupteurs (S1 et S2).

3. Dispositif d'entraînement suivant la revendication 1, comportant un moteur triphasé, dont l'enroulement statorique possède trois faisceaux d'enroulement pour chaque phase, caractérisé par le fait que respectivement deux (U1, U2 ou V1, V2 ou W1, W2) parmi les trois faisceaux d'enroulement (U1, U2, U3 ou V1, V2, V3 ou W1, W2, W3) de chaque phase (U, V, W) sont branchés en série avec un faisceau respectif d'enroulement des deux autres phases, possédant le même sens de bobinage, et que les circuits série ainsi formés, comprenant respectivement deux faisceaux d'enroulement (U1, V2 ou W1, U2 ou V1, W2), sont reliés pour former un triangle de telle sorte que la succession des phases, choisi par le montage série de deux faisceaux d'enroulement, est conservée pour le montage en triangle, qu'en outre les troisièmes faisceaux d'enroulement (U3, V3, W3) des différentes phases sont raccordées, selon la même succession de phase, aux points de jonction commun (4, 5, 6) des faisceaux d'enroulement disposées dans les différents côtés du triangle, que pendant l'accélération, les sommets (1, 2, 3) du triangle sont raccordés respectivement à une phase du réseau (R, S, T) à l'aide du premier interrupteur (S1) et qu'après l'accélération, les points de jonction commun (4, 5, 6) des faisceaux d'enroulement (U1, V2 ou W1, U2 ou V1 W2) disposés sur les côtés du triangle peuvent être raccordés au réseau (R, S, T) à l'aide de l'autre interrupteur (S2) de telle sorte qu'un circuit en triangle triple est formé.

4. Dispositif d'entraînement suivant une ou plusieurs des revendications précédentes, caractérisé par le fait qu'au moins l'un des faisceaux d'enroulement de chaque phase possède, par rapport aux autres faisceaux d'enroulement de la même phase, une section transversale différente et/ou un nombre de spires différent.

FIG 1

FIG 2

EP 0 238 940 B1

FIG 3